# EUROPÄISCHE PATENTSCHRIFT

(11) **EP 1 674 953 B1**
(45) Veröffentlichungstag und Bekanntmachung des Hinweises auf die Patenterteilung: **27.10.2010**
(21) Anmeldenummer: 04030319.0
(22) Anmeldetag: 21.12.2004
(51) Int. Cl.: G05B 19/042

(54) **System und Verfahren zur Wiederverwendung von Projektierungsdaten**
System and method for reusing of design related data
Sytème et procédé de réutilisation des données de conception

(43) Veröffentlichungstag der Anmeldung: 28.06.2006
(73) Patentinhaber: SIEMENS AKTIENGESELLSCHAFT, 80333 München (DE)
(72) Erfinder: Gikas, Diamantis, 90473 Nürnberg (DE); Lange, Ronald, 90766 Fürth (DE); Leins, Ralf, 75228 Ispringen (DE); Meusser, Klaus, 90768 Fürth (DE); Schmoll, Jürgen, 91801 Markt Berolzheim (DE)

(56) Entgegenhaltungen:
- EP-A- 0 961 184
- US-A- 5 150 308
- US-A1- 2002 073 094
- US-B1- 6 643 555
- US-B1- 6 684 220

## Beschreibung

Die Erfindung betrifft ein System und ein Verfahren zum Verwalten und/oder Bereitstellen von aus Elementen bestehenden Teillösungen.

Bei der Erstellung einer Automatisierungslösung ist es für den Projekteur von Vorteil, wenn bereits existierende Teillösungen, die in einem anderen Projekt entwickelt wurden, wieder verwendet werden können. Hierzu können existierende Teillösungen beispielsweise in einer Bibliothek, auf die im Rahmen des Engineering zurückgegriffen werden kann, gespeichert werden. Im Rahmen eines neuen Projektes werden diese Teillösungen dann entsprechend wieder verwendet und unter Umständen angepasst bzw. modifiziert. Hierbei können die Teillösungen aus mehreren Elementen, beispielsweise technologischen Objekten, die Teile einer automatisierten Anlage repräsentieren, bestehen. Die technologischen Objekte sind hierbei beispielsweise Kessel, Ventile oder Klemmen. US 2002/073094 beschreibt ein System zum verwalten von aus Elementen bestehenden Teillösungen. Auf Basis der heutzutage verwendeten Engineeringssysteme ist es derzeit nicht möglich, bestehende Teillösungen, die als Kopie aus einem anderen Projekt in einem aktuellen Projekt verwendet werden, derart zu aktualisieren, dass aktuell geänderte Elemente in die Teillösung übernommen werden.

Die Aufgabe der vorliegenden Erfindung besteht daher darin, ein System und ein Verfahren anzugeben, mit Hilfe dessen bestehende Teillösungen wieder verwendet und aktualisiert werden können.

Die Aufgabe wird gelöst durch ein System zum Verwalten und/oder Bereitstellen von aus Elementen bestehenden Teillösungen, insbesondere Lösungen bestehend aus einer Menge von technologischen Objekten für ein Automatisierungssystem, mit ersten Mitteln zum Kreieren mindestens einer Teillösung, insbesondere durch einen Benutzer des Systems, wobei die mindestens eine Teillösung als Vorlage zur Erstellung einer Kopie vorgesehen ist, mit einer Bibliothek zur Speicherung mindestens der kreierten Teillösung und mit zweiten Mitteln zum Erstellen mindestens einer Kopie einer gespeicherten Teillösung, wobei die mindestens eine Kopie der Teillösung zur Verwendung für die Erstellung einer Lösung, insbesondere einer Automatisierungslösung vorgesehen ist.

Die Aufgabe wird weiterhin gelöst, durch ein Verfahren zum Verwalten und/oder Bereitstellen von aus Elementen bestehenden Teillösungen, insbesondere Lösungen bestehend aus einer Menge von technologischen Objekten für ein Automatisierungssystem, bei dem mindestens eine Teillösung insbesondere durch einen Benutzer kreiert wird, wobei die mindestens eine Teillösung als Vorlage zur Erstellung einer Kopie dient, mindestens die kreierte Teillösung in einer Bibliothek gespeichert wird und mindestens eine Kopie einer gespeicherten Teillösung erstellt wird, wobei die mindestens eine Kopie der Teillösung zur Verwendung für die Erstellung einer Lösung, insbesondere einer Automatisierungslösung dient.

Der Erfindung liegt die Erkenntnis zugrunde, dass eine bereits erstellte Lösung im Rahmen eines neuen Engineeringprojektes wieder verwendbar sein soll und hierzu als Bibliothekselement zur Verfügung stehen soll. Eine Kopie der bereits existierenden Lösung wird hierbei erstellt und anschließend kann die Kopie im Rahmen des neuen Projektes modifiziert werden. Hierbei besitzt die Kopie der Teillösung alle notwendigen Codeelemente für ihre Ausführung im Rahmen des neuen Projekts und die Kopie ist in der Lage, sich im Rahmen des neuen Projektes bei Benutzung anzupassen (beispielsweise Blocknummern).

Die Kopie der Teillösung besteht hierbei aus einzelnen technologischen Elementen. Die technologischen Elemente sind ebenfalls Bestandteil der Bibliothek und bei Änderung der technologischen Elemente kann die Kopie der Teillösung ebenfalls aktualisiert werden. Die Aktualisierung der Teillösung kann automatisch erfolgen oder durch einen Benutzer, welcher die Elemente auswählt, die aktualisiert werden sollen.

Hierzu stehen im Rahmen des Systems Mittel zur Definition von modifizierbaren und/oder adaptierbaren Elementen und/oder Parametern einer Teillösung zur Verfügung. Ein Benutzer bzw. ein Autor einer Teillösung kann beispielsweise die Teile einer Teillösung, die adaptiert werden müssen, wenn die Teillösung benutzt wird, als solche kennzeichnen. Weiterhin besitzt die Kopie der Teillösung, also die Instanz, eine Referenz zu ihrem Ursprung, so dass eine Aktualisierung der entsprechenden Kopie der Teillösung möglich wird, wenn Änderungen in der ursprünglichen Teillösung erfolgen. Dies erfolgt beispielsweise nach Definition durch einen Benutzer nur in bestimmten, vorher als modifizierbar oder adaptierbar gekennzeichneten Elementen.

Eine weitere vorteilhafte Ausbildung der Erfindung ist **dadurch gekennzeichnet, dass** ein Element als Wurzel-Element der Teillösung ausgebildet ist. Hierdurch wird eine baumartige Struktur geschaffen, bei der beispielsweise technologische Objekte als Wurzel-Elemente dienen. Bei der Erstellung einer Kopie der Teillösung werden neben dem Programmcode, der für die Ausführung relevant ist nur solche Codeelemente kopiert, die zum Wurzelelement oder zu einem der entsprechenden Unterordner gehören.

Eine weitere vorteilhafte Ausbildung der Erfindung ist **dadurch gekennzeichnet, dass** eine bidirektionale Verbindung zwischen jeweils der Teillösung und der einen Kopie oder den mehreren Kopien der Teillösung vorgesehen ist. Hierdurch ist ein direkter Zugriff auf die ursprüngliche Teillösung, die als Basis für die Kopien dient, möglich. Eine Aktualisierung der kreierten Kopien wird durch diese bidirektionale Verbindung, die als Link ausgebildet ist, möglich.

Eine weitere vorteilhafte Ausbildung der Erfindung ist **dadurch gekennzeichnet, dass** die Elemente der Teillösung und die Elemente der Kopien der Teillösungen Zeitstempel zur Dokumentation von durch einen Benutzer getätigte Änderungen aufweisen. Hierdurch muss nicht die gesamte Kopie der Teillösung aktualisiert werden, wenn beispielsweise ein Element in der Bibliothek oder ein technologisches Objekt in der Bibliothek geändert wird. Es kann in diesem Fall ein Zeitvergleich durchgeführt werden und es wird überprüft, ob das Element in der Teillösung, die als Basis gedient hat oder das Element in der Kopie der Teillösung aktueller ist. Eine Aktualisierung der Elemente in der Kopie der Teillösung erfolgt automatisch nur dann, wenn die Elemente in der Basis, die für die Kopie zur Verfügung gestanden hat, aktualisiert wurden und die entsprechenden Elemente in der Kopie nicht verändert wurden. Ist hingegen beides der Fall, dann können die Elemente in der Basis und der Kopie entweder automatisch zusammengeführt werden (Änderungen in Basis und Kopie übernehmen)oder der Benutzer gefragt werden, welche der Änderungen (Basis oder Kopie) er übernehmen möchte. Alternativ hierzu kann mit Hilfe des vorliegenden Systems auch die gesamte Kopie der Teillösung aktualisiert werden, wenn dies durch den Benutzer gewollt ist. Hierbei müssen wiederum nicht alle existierenden Kopien aktualisiert werden. Es kann vom Benutzer ausgewählt werden, welche der gebildeten Kopien der Teillösung auf Basis der neuen Teillösung aktualisiert werden.

Im Folgenden wird die Erfindung anhand der in den Figuren dargestellten Ausführungsbeispiele näher beschrieben und erläutert. Es zeigen:
- FIG 1: eine schematische Darstellung des Systems zum Verwalten und Bereitstellen von Teillösungen,
- FIG 2: eine schematische Darstellung eines Modells für Teillö- sungen.

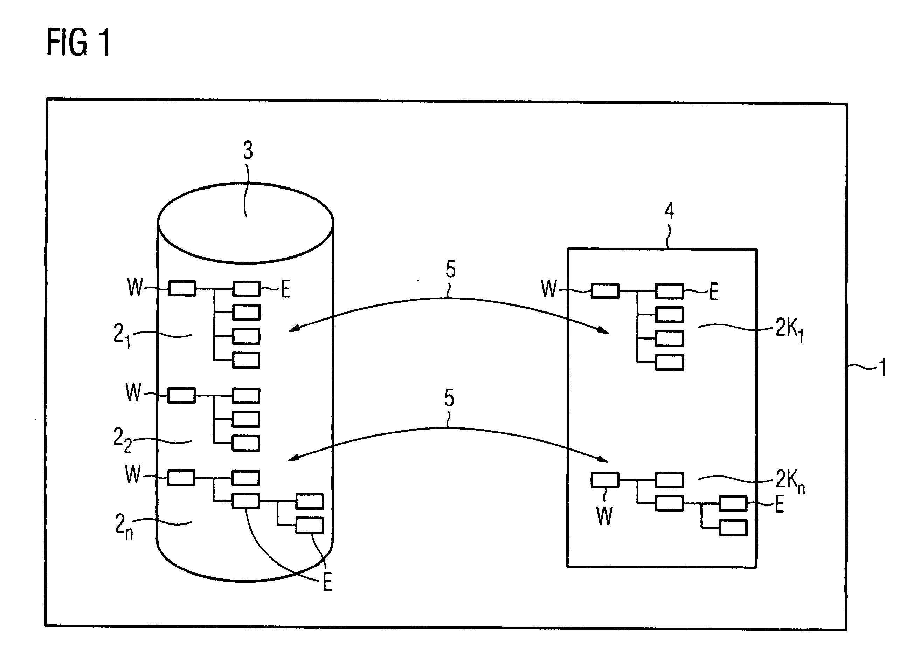

FIG 1 zeigt ein System 1 zum Verwalten und Bereitstellen von Teillösungen 2₁..2ₙ. Die Teillösungen bestehen hierbei aus Elementen E. Eine Teillösung weist jeweils ein Element als Wurzel-Element W aus. Die Teillösungen sind im Rahmen des Systems in einer Bibliothek 3 gespeichert. Aus den bestehenden Teillösungen werden im Rahmen des Systems Kopien 2K₁..2Kₙ erstellt. Die Kopien der Teillösungen können im Rahmen einer Lösung 4 für ein Automatisierungssystem verwendet werden. Zwischen den Teillösungen und ihren Kopien bestehen bidirektionale Verbindungen 5 die in Form eines Links ausgebildet sind.

Durch die Verlinkung können die Kopien der Teillösung aktualisiert werden, wenn eine Teillösung oder Elemente einer Teillösung, die in der Bibliothek gespeichert sind, verändert wurden. Die Aktualisierung kann hierbei durch den Benutzer des Systems 1 gesteuert werden. Die Kopien der Teillösung sind quasi Instanzen der in der Bibliothek gespeicherten Lösungen. Eine Instanz bringt die nötige Menge an Informationen mit, die für ihre Ausführung wichtig sind.

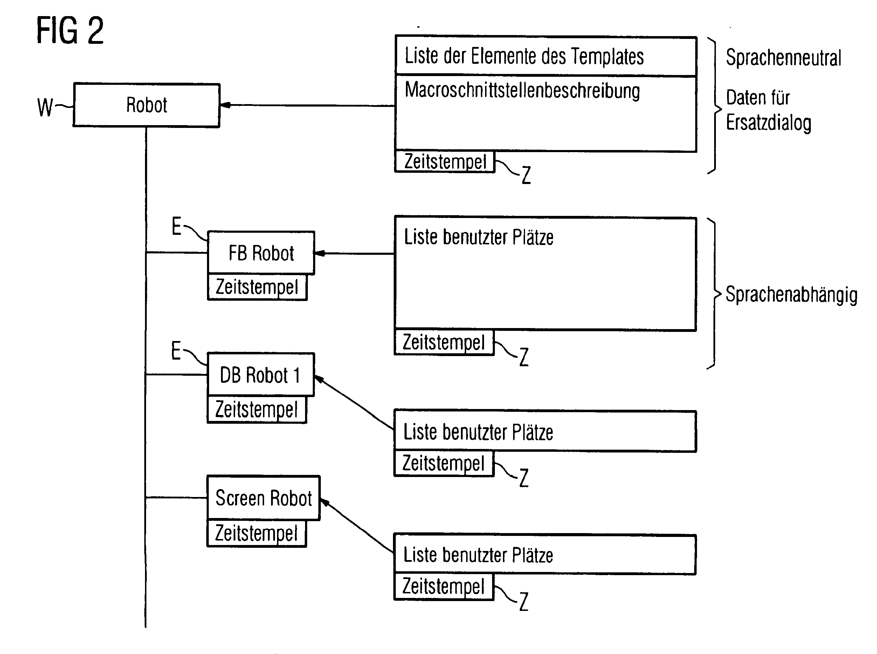

FIG 2 zeigt ein Basismodell für eine Teillösung, die als Template ausgebildet ist. In diesem Beispiel ist "Robot" das Wurzel-Element der Teillösung, welches kreiert wurde, indem ein technologischer Ordner benutzt wurde. Das Wurzel-Element beinhaltet eine Liste all der Elemente, die in dieser Teillösung vorkommen, beispielsweise "FB-Robot", "DB-Robot 1" und "Screen-Robot". Das Wurzelelement beinhaltet weiterhin eine Liste von Parametern (Makro-Interface-Discription) und deren Namen sowie den Basiswert, mit dem der Parameter belegt ist und einen Kommentar. Diese Informationen werden im Rahmen des Dialogs, der gezeigt wird, wenn die Kopie der Teillösung benutzt wird, gebraucht. Diese Beschreibung bzw. Information ist unabhängig von der verwendeten Sprache, d.h. sie ist nicht abhängig von den Typen bzw. Elementen oder technologischen Objekten, die in die Teillösung integriert sind. Diese Schnittstelleninformation bzw. Beschreibung und der Dialog der Teillösung können aus diesem Grund mit einer gängigen Softwarekomponente dargestellt bzw. bearbeitet werden.

Die Elemente der Teillösung, also "FB-Robot", "DB-Robot 1" und "Screen-Robot" besitzen eine Liste von Parametern des Templates bzw. der Teillösung, die von den jeweiligen Element genutzt werden und sie besitzen weiterhin die Information wo sie genutzt werden. Diese Liste ist abhängig von der Sprache des jeweiligen Elements, da die Information wo ein Parameter der Kopie der Teillösung benutzt wird nicht generell beschrieben werden kann.

Die Teillösung bzw. deren Kopie wird innerhalb des neuen Projektes verwendet. Die Struktur der Kopie bzw. der Instanz der Teillösung ist hierbei identisch zu der Struktur der Basisteillösung, welche in der Bibliothek gespeichert ist. Die einzelnen Elemente verfügen über Zeitstempel Z, welche anzeigen wann das jeweilige Element zuletzt bearbeitet bzw. aktualisiert wurde. Auf Basis dieser Zeitstempel kann eine benutzerdefinierte oder eine generelle Aktualisierung der Kopien der Teillösung bzw. der Instanzen erfolgen. Ein Element wird nur dann ersetzt, wenn sein Zeitstempel älter ist als derjenige des entsprechenden Elements der Basisteillösung in der Bibliothek. Wenn die Zeitstempel der Kopie älter sind, dann wird automatisch aktualisiert. Wenn aber beide Zeitstempel gegenüber dem "Kopier- bzw. Instanziiervorgang" verändert worden sind (also auf beiden Seiten Änderungen gemacht wurden), dann werden entweder die Änderungen von Basis und Kopie "zusammengemischt" oder der Anwender wird gefragt, welche Änderung er übernehmen will. Auf diese Weise kann eine Teillösung einfach wieder verwendet und auch aktualisiert werden.

## Patentansprüche

1. System (1) zum Verwalten und/oder Bereitstellen von aus Elementen (E) bestehenden Teillösungen, bestehend aus einer Menge von technologischen Objekten für ein Automatisierungssystem,
• mit ersten Mitteln zum Kreieren mindestens einer Teillösung (2₁..2ₙ), insbesondere durch einen Benutzer des Systems, wobei die mindestens eine Teillösung (2₁..2ₙ) als Vorlage zur Erstellung einer Kopie vorgesehen ist,
• mit einer Bibliothek (3) zur Speicherung mindestens der kreierten Teillösung (2₁..2ₙ) und
• mit zweiten Mitteln zum Erstellen mindestens einer Kopie (2K₁..2Kₙ) einer gespeicherten Teillösung (2₁..2ₙ), wobei die mindestens eine Kopie (2K₁..2Kₙ) der Teillösung zur Verwendung für die Erstellung einer Lösung (4), insbesondere einer Automatisierungslösung vorgesehen ist **dadurch gekennzeichnet, dass**
• eine bidirektionale Verbindung (5) zwischen jeweils der Teillösung und der einen Kopie oder den mehreren Kopien der Teillösung vorgesehen ist und ein direkter Zugriff auf die ursprüngliche Teillösung möglich ist.

2. System nach Anspruch 1, bei dem dritte Mittel zur Definition von modifizierbaren und/oder adaptierbaren Elementen und/oder Parametern einer Teillösung vorgesehen sind.

3. System nach Anspruch 1 oder 2, bei dem ein Element als Wurzel-Element (W) der Teillösung ausgebildet ist.

4. System nach einem der Ansprüche 1 bis 3, bei dem die Elemente der Teillösung und die Elemente der Kopien der Teillösungen Zeitstempel (Z) zur Dokumentation von durch einen Benutzer getätigten Änderungen aufweisen.

5. System nach einem der Ansprüche 1 bis 4, bei dem vierte Mittel zur Aktualisierung mindestens einer Kopie einer Teillösung bei Änderung und/oder Ersatz der Teillösung vorgesehen sind.

6. System nach einem der Ansprüche 1 bis 5, bei dem die vierten Mittel zur Aktualisierung einer Kopie einer Teillösung derart ausgebildet sind, dass eine Aktualisierung nach Vergleich der Zeitstempel der Elemente der Teillösung mit den Elementen der Kopie der Teillösung erfolgt.

7. System nach Anspruch 6, bei dem die vierten Mittel zur Aktualisierung der Elemente der Kopie der Teillösung, deren Zeitstempel älter ist als der Zeitstempel der Elemente der Teillösung, vorgesehen sind.

8. System nach Anspruch 6, bei dem die vierten Mittel zur Durchführung einer Abfrage eines Anwenders über die durchzuführende Aktualisierung vorgesehen sind, wenn die Elemente der Teillösung und die Elemente der Kopie der Teillösung einen jüngeren Zeitstempel aufweisen, der jünger als der Kopiervorgang ist.

9. System nach einem der Ansprüche 1 bis 8, bei dem das System als Engineering-System für Automatisierungssysteme ausgebildet ist.

10. Verfahren zum Verwalten und/oder Bereitstellen von aus Elementen (E) bestehenden Teillösungen (2₁..2ₙ), bestehend aus einer Menge von technologischen Objekten für ein Automatisierungssystem, bei dem
• mindestens eine Teillösung (2₁..2ₙ) insbesondere durch einen Benutzer kreiert wird, wobei die mindestens eine Teillösung (2₁..2ₙ) als Vorlage zur Erstellung einer Kopie (2K₁..2Kₙ) dient,
• mindestens die kreierte Teillösung (2₁..2ₙ) in einer Bibliothek (3) gespeichert wird und
• mindestens eine Kopie (2K₁..2Kₙ) einer gespeicherten Teillösung (2₁..2ₙ) erstellt wird, wobei die mindestens eine Kopie (2K₁..2Kₙ) der Teillösung zur Verwendung für die Erstellung einer Lösung (4), insbesondere einer Automatisierungslösung dient
**dadurch gekennzeichnet, dass**
• jeweils die Teillösung mit der einen Kopie oder den mehreren Kopien der Teillösung bidirektional verbunden ist..

11. Verfahren nach Anspruch 10, bei dem modifizierbare und/oder adaptierbare Elemente und/oder Parameter einer Teillösung definiert werden.

12. Verfahren nach Anspruch 10 oder 11, bei dem ein Element als Wurzel-Element (W) der Teillösung definiert wird.

13. Verfahren nach einem der Ansprüche 10 bis 12, bei dem durch einen Benutzer getätigte Änderungen der Elemente der Teillösung und der Elemente der Kopien der Teillösungen durch Zeitstempel (Z) zur dokumentiert werden.

14. Verfahren nach einem der Ansprüche 10 bis 13, bei dem eine Kopie einer Teillösung bei Änderung und/oder Ersatz der Teillösung aktualisiert wird.

15. Verfahren nach einem der Ansprüche 10 bis 14, bei dem eine Aktualisierung nach Vergleich der Zeitstempel der Elemente der Teillösung mit den Elementen der Kopie der Teillösung erfolgt.

16. Verfahren nach Anspruch 15, bei dem die Elemente der Kopie der Teillösung, deren Zeitstempel älter ist als der Zeitstempel der Elemente der Teillösung, aktualisiert werden.

17. Verfahren nach Anspruch 15, eine Abfrage eines Anwenders über die durchzuführende Aktualisierung erfogt, wenn die Elemente der Teillösung und die Elemente der Kopie der Teillösung einen jüngeren Zeitstempel aufweisen, der jünger als der Kopiervorgang ist.

18. Verfahren nach einem der Ansprüche 10 bis 15, bei dem die Kopien der Teillösungen mittels eines Engineering-Systems für Automatisierungssysteme erstellt werden.

## Claims

1. System (1) for managing and/or providing partial solutions consisting of elements (E), said partial solutions comprising a number of technological objects for an automation system,
• having first means for creating at least one partial solution (2₁..2ₙ), especially by a user of the system, with the at least one partial solution (2₁..2ₙ) being provided as a model for creating a copy,
• having a library (3) for storing at least the created partial solution (2₁..2ₙ) and
• having second means for creating at least one copy (2K₁..2Kₙ) of a saved partial solution (2₁..2ₙ), with the at least one copy (2K₁..2Kₙ) of the partial solution being provided for use for the creation of a solution (4), in particular an automation solution, **characterized in that** a bidirectional connection (5) is provided between the partial solution and the one copy or the number of copies of the partial solution in each instance and direct access to the original partial solution is possible.

2. System according to claim 1, in which third means are provided for defining modifiable and/or adaptable elements and/or parameters of a partial solution.

3. System according to claim 1 or 2, in which an element is designed as a root element (W) of the partial solution.

4. System according to one of claims 1 to 3, in which the elements of the partial solution and the elements of the copies of the partial solution feature time stamps (Z) for documenting changes activated by a user.

5. System according to one of claims 1 to 4, in which fourth means are provided for updating at least one copy of a partial solution if the partial solution is changed and/or replaced.

6. System according to one of claims 1 to 5, in which the fourth means for updating a copy of a partial solution are designed such that an updating takes place after a comparison of the time stamps of the elements of the partial solution with the elements of the copy of the partial solution.

7. System according to claim 6, in which the fourth means are provided for updating the elements of the copy of the partial solution, the time stamp of which is older than the time stamp of the elements of the partial solution.

8. System according to claim 6, in which the fourth means are provided for asking a user about the updating to be carried out if the elements of the partial solution and the elements of the copy of the partial solution feature a more recent time stamp, which is more recent than the copy process.

9. System according to one of claims 1 to 8, in which the system is embodied as an engineering system for automation systems.

10. Method for managing and/or providing partial solutions (2₁..2ₙ) consisting of elements (E), said partial solutions comprising a number of technological objects for an automation system, in which
• at least one partial solution (2₁..2ₙ) is created especially by a user, with the at least one partial solution (2₁..2ₙ) serving as a model for creating a copy (2K₁..2Kₙ),
• at least the created partial solution (2₁..2ₙ) is saved in a library (3) and
• at least one copy (2K₁..2Kₙ) of a saved partial solution (2₁..2ₙ) is created, with the at least one copy (2K₁..2Kₙ) of the partial solution serving for use in the creation of a solution (4), in particular an automation solution, **characterized in that** the partial solution is bidirectionally connected in each instance with the one or more copies of the partial solution.

11. Method according to claim 10, in which modifiable and/or adaptable elements and/or parameters of a partial solution are defined.

12. Method according to claim 10 or 11, in which an element is defined as a root element (W) of the partial solution.

13. Method according to one of claims 10 to 12, in which changes to the elements of the partial solution and the elements of the copies of the partial solutions activated by a user are documented by time stamps (Z).

14. Method according to one of claims 10 to 13, in which a copy of a partial solution is updated when the partial solution is changed and/or replaced.

15. Method according to one of claims 10 to 14, in which an update is carried out after a comparison of the time stamps of the elements of the partial solution with the elements of the copy of the partial solution.

16. Method according to claim 15, in which the elements of the copy of the partial solution are updated, the time stamp of which is older than the time stamp of the elements of the partial solution.

17. Method according to claim 15, in which a user is asked about the update to be carried out, if the elements of the partial solution and the elements of the copy of the partial solution feature a more recent time stamp, which is more recent than the copy process.

18. Method according to one of claims 10 to 15, in which the copies of the partial solutions are created for automation systems by means of an engineering system.

## Revendications

1. Système ( 1 ) de gestion et/ou de préparation de solutions partielles constituées d'éléments ( E ), constituées d'un certain nombre d'objets technologiques pour un système d'automatisation,
• comprenant des premiers moyens de création d'au moins une solution ( 21..2n ) partielle, notamment par un utilisateur du système, la au moins une solution ( 21..2n ) étant prévue comme modèle pour l'établissement d'une copie,
• comprenant une bibliothèque ( 3 ) de mémorisation d'au moins la solution ( 21..2n ) partielle créée et
• comprenant des deuxièmes moyens d'établissement d'au moins une copie ( 2K1..2Kn ) d'une solution ( 21..2n ) partielle mémorisée, la au moins une copie ( 2K1..2Kn ) de la solution partielle étant prévue pour être utilisée pour l'établissement d'une solution ( 4 ), notamment d'une solution d'automatisation,
**caractérisé en ce que**
• il est prévu une liaison ( 5 ) bidirectionnelle entre respectivement la solution partielle et la une copie ou les plusieurs copies de la solution partielle et un accès direct à la solution partielle d'origine est possible.

2. Système suivant la revendication 1, dans lequel il est prévu des troisièmes moyens de définition d'éléments et/ou de paramètres modifiables et/ou adaptables d'une solution partielle.

3. Système suivant la revendication 1 ou 2, dans lequel un élément est constitué sous la forme d'un élément ( W ) de racine de la solution partielle.

4. Système suivant l'une des revendications 1 à 3, dans lequel les éléments de la solution partielle et les éléments des copies des solutions partielles ont un horodatage ( Z ) pour mettre en documentation des modifications effectuées par un utilisateur.

5. Système suivant l'une des revendications 1 à 4, dans lequel il est prévu des quatrièmes moyens de mise à jour d'au moins une copie d'une solution partielle si la solution partielle est modifiée et/ou remplacée.

6. Système suivant l'une des revendications 1 à 5, dans lequel les quatrièmes moyens de mise à jour d'une copie d'une solution partielle sont constitués par le fait qu'une mise à jour est effectuée après comparaison de l'horodatage des éléments de la solution partielle aux éléments de la copie de la solution partielle.

7. Système suivant la revendication 6, dans lequel les quatrièmes moyens sont prévus pour la mise à jour des éléments de la copie de la solution, dont l'horodatage est plus vieux que l'horodatage des éléments de la solution partielle.

8. Système suivant la revendication 6, dans lequel les quatrièmes moyens sont prévus pour effectuer une interrogation d'un utilisateur sur la mise à jour qui s'effectue, si les éléments de la solution partielle et les éléments de la copie de la solution partielle ont un horodatage plus récent, qui est plus récent que l'opération de copie.

9. Système suivant l'une des revendications 1 à 8, dans lequel le système est constitué en système d'ingénierie pour des systèmes d'automatisation.

10. Procédé de gestion et/ou de préparation de solutions ( 21..2n ) partielles constituées d'éléments ( E ), constituées d'un certain nombre d'objets technologiques pour un système d'automatisation, dans lequel
• il est créé au moins une solution ( 21..2n ) partielle, notamment par un utilisateur, la au moins une solution ( 21..2n ) servant de modèle à l'établissement d'une copie ( 2K1..2Kn ),
• on mémorise au moins la solution ( 21..2n ) partielle créée dans une bibliothèque ( 3 ) et
• on établit au moins une copie ( 2K1..2Kn ) d'une solution ( 21..2n ) partielle mémorisée, la au moins une copie ( 2K1..2Kn ) de la solution partielle servant à l'établissement d'une solution ( 4 ), notamment d'une solution d'automatisation,
**caractérisé en ce que**
• respectivement la solution partielle est reliée bidirectionnellement à la une copie ou aux plusieurs copies de la solution partielle.

11. Procédé suivant la revendication 10, dans lequel on définit des éléments et/ou des paramètres modifiables et/ou adaptables d'une solution partielle.

12. Procédé suivant la revendication 10 ou 11, dans lequel on définit un élément en tant qu'élément de données de racine de la solution partielle.

13. Procédé suivant l'une des revendications 10 à 12, dans lequel des modifications effectuées par un utilisateur, des éléments de la solution partielle et des éléments de copie des solutions partielles sont mis en documentation par horodatage ( Z ).

14. Procédé suivant l'une des revendications 10 à 13, dans lequel on met à jour une copie d'une solution partielle si la solution partielle est modifiée et/ou remplacée.

15. Procédé suivant l'une des revendications 10 à 14, dans lequel on effectue une mise à jour après avoir comparé l'horodatage des éléments de la solution partielle aux éléments de la copie de la solution partielle.

16. Procédé suivant la revendication 15, dans lequel on met à jour les éléments de la copie de la solution partielle, dont l'horodatage plus vieux que l'horodatage des éléments de la solution partielle.

17. Procédé suivant la revendication 15, dans lequel une interrogation d'un utilisateur sur la mise à jour qui s'effectue, s'effectue si les éléments de la solution partielle et les éléments de la copie de la solution partielle ont un horodatage plus récent, qui est plus récent que l'opération de copie.

18. Procédé suivant l'une des revendications 10 à 15, dans lequel on établit les copies des solutions partielles au moyen d'un système d'ingénierie pour des systèmes d'automatisation.
